# EUROPÄISCHE PATENTSCHRIFT

(11) **EP 3 447 005 B1**
(45) Veröffentlichungstag und Bekanntmachung des Hinweises auf die Patenterteilung: **04.03.2020**
(21) Anmeldenummer: 17187268.2
(22) Anmeldetag: 22.08.2017
(51) Int. Cl.: B65D 85/68, B65D 61/00, E04H 12/08, F03D 13/40

(54) **SYSTEM UND VERFAHREN ZUM HANDHABEN, LAGERN UND TRANSPORTIEREN VON TURMSEGMENTEN**
SYSTEM AND METHOD FOR HANDLING, STORING AND TRANSPORTING TOWER SEGMENTS
SYSTÈME ET PROCÉDÉ DE MANIPULATION, DE STOCKAGE ET DE TRANSPORT DE SEGMENTS DE TOUR

(43) Veröffentlichungstag der Anmeldung: 27.02.2019
(73) Patentinhaber: Nordex Energy GmbH, 22419 Hamburg (DE)
(72) Erfinder: Engelking, Thilo, 22767 Hamburg (DE)
(74) Vertreter: Garrels, Sabine

(56) Entgegenhaltungen:
- WO-A1-2008/104185
- WO-A1-2016/055070
- WO-A2-2007/093854
- WO-A2-2012/003831

## Beschreibung

Die Erfindung betrifft ein System gemäß Anspruch 1. Des Weiteren bezieht sich die Erfindung auf ein Verfahren gemäß Anspruch 8.

Es sind Vorrichtungen der vorbezeichneten Gattung bekannt, wie zum Beispiel Transportbeschläge, mit deren Hilfe Beschädigungen an den Turmsegmenten während des Bewegens, der Lagerung oder des Transports vermieden werden sollen. Das Vermeiden von Beschädigungen ist besonders dann wichtig, wenn die Oberflächen der Turmsegmente bereits endbehandelt sind und jede unnötige Beschädigung aufwendige Instandsetzungs- und Reparaturarbeiten zur Folge hätte.

Aus der DE 10223416 A1 ist eine Vorrichtung zum Handhaben von Turmsektionen bekannt, die ein etwa quadratisches Rahmengestell aufweist. In den Eckbereichen des Rahmengestelles sind Montageplatten angeordnet, die eine Vielzahl von Durchbrüchen aufweisen, über die eine Verbindung zwischen Transportanschlag und Turmsegment hergestellt werden kann.

Mit zunehmendem Bedarf an Windenergieanlagen mit höherer Leistung und somit größeren Abmessungen der Hauptkomponenten, wie Turm, Gondel und Rotorblätter, wurden die zulässigen Grenzen für Fahrzeugabmessungen, insbesondere die maximale Höhe von rund 4 Metern erreicht. Auch die durch die logistische Infrastruktur gegebenen Grenzen, z.B. lichte Höhe unter Brücken, machen es erforderlich, Turmsektion mit mehr als vier Metern Durchmesser in ihrer Längserstreckung in Segmente zu teilen.

Die WO 2015/158351 A1 offenbart einen derartigen Stahlturm für eine Windenergieanlage, der eine Anzahl von zylindrischen oder konischen Turmsektionen umfasst, wobei zumindest seine breiteren Sektionen in zwei oder mehr längliche Sektionssegmente unterteilt sind, die sich mittels vertikaler Flansche, die aneinander durch eine Vielzahl von Bolzen befestigt sind, zu einer vollständigen Turmsektion vereinigen, wobei die Sektionssegmente zudem obere und untere horizontale Ringflanschsegmente aufweisen, um eine Verbindung der Turmsektionen aufeinander zu ermöglichen. Für den Transport der Sektionssegmente sind dort Träger vorgesehen, die jeweils mit einem Ringflanschsegment verschraubt sind, wobei zum Lagern der Sektionssegmente diese derart übereinander gestapelt sind, dass die Träger unmittelbar aufeinander liegen.

In WO 2012/003831 A2 wird ein System und ein Verfahren zum Handhaben eines Turmabschnitts für eine Windkraftanlage offenbart. Eine Befestigung trägt ein Ende des Turmabschnitts in einer im Wesentlichen horizontalen Ausrichtung. Die Halterung enthält eine Vielzahl von Adapterlöchern. Eine entsprechende Anzahl von Einsätzen ist in den Adapterlöchern positioniert. Jeder der Einsätze umfasst mindestens ein Bolzenloch, das mit einem Bolzenloch in einem Flansch des Turmabschnitts ausgerichtet ist, wenn es in dem entsprechenden Adapterloch positioniert ist.

WO 2007/093854 A2 offenbart eine Befestigung, die mit einem Ende eines großen Bauteils verbunden werden soll, wie z. B. Rotorblätter und Turmabschnitte einer Windenergieanlage. Außerdem wird ein Verfahren zum Lagern und Transportieren von Rotorblättern und Turmabschnitten einer Windenergieanlage offenbart.

### Darstellung der Erfindung

Es ist eine Aufgabe der Erfindung, ein System zum temporären Lagern und Transportieren von Turmsektionssegmenten bereitzustellen, welches modular aufgebaut und hinsichtlich der Anzahl, der Länge und der Breite der zu lagernden und/oder zu transportierenden Turmsektionssegmente skalierbar ist.

Die Aufgabe wird gelöst durch ein System zum Lagern, Transportieren und/oder Handhaben von Sektionssegmenten eines Turms einer Windenergieanlage, umfassend zwei Gestelle und wenigstens zwei Traversen, die mit wenigsten einem Sektionssegment verbindbar sind. Jede Traverse weist mindestens zwei Zapfen auf, welche mit Aufnahmen an den Gestellen korrespondieren. Erfindungsgemäß umfasst jedes Gestell zwei beabstandete Säulen, die mittels wenigstens eines Querbalkens und/oder wenigstens einer Strebe lösbar miteinander verbunden sind. Der Abstand der Säulen ist einstellbar ausgeführt, was durch eine geeignete Gestaltung der Querbalken bzw. Streben ermöglicht wird. Die Aufnahmen für die Traversen sind an den Säulen gelagert. Sie sind derart gestaltet, dass sie im Zusammenwirken mit den Zapfen an den Traversen eine sichere Lagerung der Traversen an den Gestellen ermöglichen. Insbesondere weisen die Aufnahmen geeignet gestaltete Ausnehmungen für die Zapfen auf, die in Form und Größe an die Zapfen angepasst sind. Weiterhin können Arretierungen vorgesehen sein, mittels derer die Zapfen der Traversen in den Aufnahmen festgehalten werden, um ein unbeabsichtigtes Lösen zu verhindern und eine Transportsicherung zu bilden. Wenigstens eine Aufnahme an jeder Säule ist um eine vertikale Achse schwenkbar gelagert.

Insbesondere bevorzugt sind an jeder Säule mindestens zwei, vorzugsweise drei Aufnahmen übereinander gelagert, wobei zumindest eine Aufnahme, nämlich alle oberen Aufnahmen, um eine vertikale Achse um wenigstens 90°, vorzugsweise um 360° schwenkbar ausgeführt sind. Lediglich die unterste Aufnahme muss nicht, kann jedoch auch schwenkbar ausgeführt sein. Hiermit ist auf einfache Weise sichergestellt, dass das jeweils weiter unten gelagerte Sektionssegment sich kollisionsfrei und ohne Demontage anderer Aufnahmen mittels eines Krans oder eines Schwerlaststaplers entnehmen lässt.

In einer besonders bevorzugten Weiterbildung der Erfindung weist jede Säule, zwischen jeweils zwei Aufnahmen eine auswechselbare Distanzhülse zum Einstellen eines vorbestimmten Abstands auf. Hiermit ist auf einfache Weise die Möglichkeit gegeben, dass die Sektionssegmente unterschiedlich beabstandet gestapelt werden können, beispielsweise wenn darin verschiedene Einbauten bereits vormontiert sind. Diese Anordnung ist hinsichtlich der Logistik besonders vorteilhaft für drei zusammengehörige 120°-Segmente einer Turmsektion. Aufgrund der Modularität des Systems kann dieses auch für beispielsweise zwei halbschalenförmige 180°-Segmente oder vier 90°-Segmente konfiguriert werden. Insbesondere für den Transport von Turmsektionssegmenten auf Schiffen können auch mehr als vier Segmente von einem erfindungsgemäßen System aufgenommen werden, wobei jeweils eine entsprechende Anzahl von Aufnahmen und Distanzhülsen vorzusehen ist.

In einer vorteilhaften Ausbildung der Erfindung sind die Zapfen auf einer vorbestimmten, insbesondere einzigen Seite der Traverse, nämlich auf der dem Gestell zugewandten Seite angeordnet, wobei die Zapfen bevorzugt pilz- oder pollerförmig ausgebildet sind. Zudem sind die Zapfen bevorzugt gleichmäßig beabstandet auf der Traverse oder den Traversen angeordnet.

Weiter bevorzugt weist jede Traverse mindestens einen Anschlagpunkt auf, mittels dessen ein Anschlagen an ein Hebezeug möglich ist, wahlweise über ein Anschlagmittel, wie beispielsweise eine Schlinge, oder direkt an das Tragmittel des Hebezeugs, wie beispielsweise einen Kranhaken. Der Anschlagpunkt oder die Anschlagpunkte können in beliebiger Weise geeignet gestaltet sein, insbesondere als weiterer Zapfen an der Traverse oder beispielsweise als Bohrung oder als Ausnehmung auf der Unterseite der Traverse, in die ein Anschlagmittel derart eingelegt werden kann, dass es nicht unkontrolliert verrutscht. Mehrere Anschlagpunkte sind vorzugsweise gleichmäßig verteilt an der Traverse angeordnet.

Bevorzugt sind die Traversen kostengünstig als Platten ausgebildet, wobei jede Traverse bzw. Platte wenigstens zwei, vorzugsweise vier Durchgangsbohrungen aufweist, die auf einem gemeinsamen Lochkreis angeordnet sind, um mit einem stirnseitigen Ringflanschsegment eines Sektionssegments verschraubt zu werden. In einer Weiterbildung sind in einer oder jeder Traverse oder Platte Durchgangsbohrungen vorgesehen, die auf wenigstens zwei Lochkreisen mit verschiedenen Durchmessern liegen, damit Sektionssegmente verschiedener Größe oder genauer gesagt mit verschiedenen Lochkreisdurchmessern in den Ringflanschsegmenten mit den plattenförmigen Traversen verbindbar sind.

Das erfindungsgemäße System zum Lagern, Transportieren und/oder Handhaben von Sektionssegmenten eines Turms einer Windenergieanlage bietet zeitliche und wirtschaftliche Einsparungen gegenüber bekannten nicht modularen Systemen oder Gestellen zum Lagern und/oder Transportieren von Sektionssegmenten. Ein zeitsparender Aspekt der Nutzung des erfindungsgemäßen Systems liegt darin, dass die Sektionssegmente bereits mit Einbauten in Form von Komponenten für eine Befahranlage, Leiterabschnitten, Kabelhalteeinrichtungen, Stromschienen und/oder anderen Einbauten, die in Längsrichtung des Turmes bzw. der Sektionssegmente verlaufen, versehen sein können, bevor die Sektionssegmente zum Montageort transportiert werden.

Die Aufgabe wird auch gelöst durch ein Verfahren gemäß Anspruch 8.

Eine bevorzugte Fortbildung des Verfahrens umfasst die weiteren Schritten zum Handhaben der Sektionssegmente: Anschlagen eines ersten Lastaufnahmemittels an einer ersten Traverse, Verbinden, insbesondere Verschrauben der ersten Traverse mit dem ersten Ringflanschsegment eines ersten Sektionssegments, Anschlagen eines zweiten Lastaufnahmemittels an einer zweiten Traverse, Verbinden, insbesondere Verschrauben der zweiten Traverse mit dem zweiten Ringflanschsegment des ersten Sektionssegments, im Wesentlichen gleichzeitiges Anheben beider mit dem Sektionssegment verbundenen Traversen, mittels wenigstens eines Kranes oder Schwerlaststaplers, Verbringen des ersten Sektionssegments oberhalb der Gestelle, Absenken und Absetzen des Sektionssegments mittels der verbundenen Traversen derart, dass die Zapfen der Traversen in die Aufnahmen der untersten Ebene der Gestelle eingeführt werden oder sind und Lösen des ersten und zweiten Lastaufnahmemittels von der ersten bzw. zweiten Traverse.

Eine bevorzugte Weiterbildung des Verfahrens umfasst die nachfolgenden Schritte zum Handhaben eines zweiten und/oder weiteren Sektionssegments: Anschlagen des ersten und zweiten Lastaufnahmemittels an jeweils einer weiteren Traverse, Verbinden, insbesondere Verschrauben der weiteren Traversen mit den Ringflanschsegmenten eines zweiten oder weiteren Sektionssegments, im Wesentlichen gleichzeitiges Anheben der mit dem Sektionssegment verbundenen Traversen mittels des wenigstens einen Kranes oder Schwerlaststaplers, Schwenken der vier Aufnahmen der zweiten oder weiteren Ebene der Gestelle um eine vertikale Achse derart, dass diese den aufzunehmenden Zapfen zugewandt sind, Verbringen des zweiten oder weiteren Sektionssegments oberhalb der Gestelle, Absenken und Absetzen des Sektionssegments mittels der verbundenen Traversen, derart, dass die Zapfen der Traversen in die Aufnahmen der zweiten und/oder weiteren Ebene der Gestelle eingeführt werden oder sind und Lösen des ersten und des zweiten Lastaufnahmemittels von den weiteren Traversen.

### Ausführung der Erfindung

Nachstehend ist ein Ausführungsbeispiel des Systems gemäß der Erfindung unter Bezugnahme auf die beigefügten Zeichnungen beschrieben, in denen
- Fig. 1: eine perspektivische Gesamtansicht einer Turmsektion eines Windenergieanlagenturms,
- Fig. 2: eine Perspektivansicht eines erfindungsgemäßen Gestells nebst Traversen und verbundenen Sektionssegmenten,
- Fig. 3: eine Perspektivansicht einer erfindungsgemäßen Traverse aus Fig. 2 in vergrößerter Darstellung,
- Fig. 4: eine Perspektivansicht einer weiteren erfindungsgemäßen Traverse und
- Fig. 5: eine Perspektivansicht eines erfindungsgemäßen Gestells aus Fig. 2 in vergrößerter Darstellung zeigen.

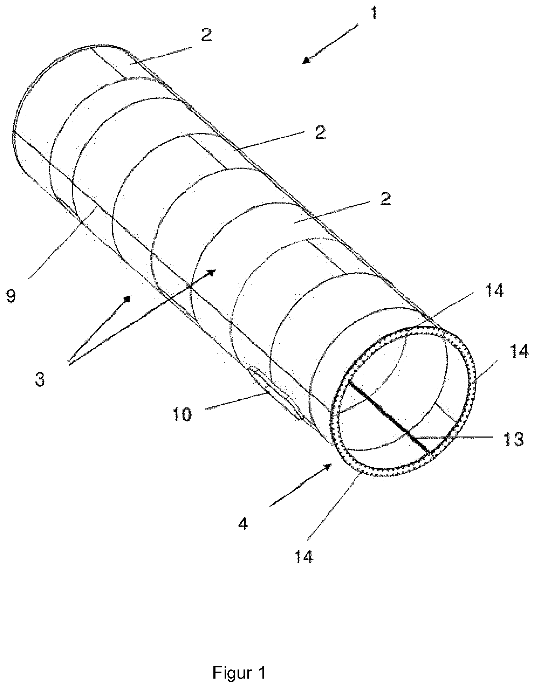

Fig. 1 zeigt eine untere Turmsektion 1 mit einer Turmzugangstüröffnung 10. Die Turmsektion 1 umfasst eine Anzahl von Sektionsabschnitten 2, fachsprachlich auch als "Schüsse" oder "cans" bezeichnet. Die Sektionsabschnitte 2 weisen vom Herstellungsprozess regelmäßig eine Längsschweißnaht auf. Weitere Turmsektionen 1 sind, ohne die Turmzugangstüröffnung 10, entsprechend aufgebaut, wobei die Anzahl der Sektionsabschnitte 2 variieren kann. Im gezeigten Ausführungsbeispiel weist die Turmsektion 1 insgesamt neun Sektionsabschnitte 2 auf, welche an ihren Stirnseiten miteinander verschweißt sind. Die freien Stirnseiten der äußeren Sektionsabschnitte 2 einer Turmsektion sind jeweils mit einem Ringflansch 4 verschweißt. Es ist bekannt, anstelle geschlossener Ringflansche einzelne Ringflanschsegmente 14 an die freien Stirnseiten der äußeren Sektionsabschnitte 2 einer Turmsektion 1 anzuschweißen. Wie die Figur 1 weiter erkennen lässt, sind die einzelnen Sektionsabschnitte 2 zueinander um ihre Längsachse derart verdreht, dass ihre Längsschweißnähte stets um einen Versatzwinkel gegeneinander versetzt sind, sodass die Längsschweißnähte benachbarter Sektionsabschnitte 2 nicht in einer Linie fluchten. Die Summe der Versatzwinkel ergibt bevorzugt 360° oder ein ganzzahliges Vielfaches davon. Die Fig. 1 zeigt ferner ein erstes Längsprofil 13 etwa in der 5-Uhr-Position, welches sich an der Innenseite der Wandung der Turmsektion 1 parallel zu deren Mittelachse erstreckt und mit der Wandung verschweißt ist. Neben dem gezeigten Längsprofil 13 weist die Turmsektion 1 zwei weitere, von außen nicht sichtbare Längsprofile 13 auf, die jeweils um 120° versetzt in der Rohrwandung angeordnet sind. In einem nachfolgenden Herstellungsschritt wird die Turmsektion 1 entlang einer ersten, zweiten und dritten geplanten Trennlinie 9 in drei Sektionssegmente 3 geteilt, wobei die geplanten Trennlinien 9 jeweils mit den Längsprofilen 13 zusammenfallen. Mit anderen Worten erfolgt der jeweilige Längsschnitt durch das Längsprofil 13 oder zwischen einem Paar von einzelnen Längsflanschen, so dass die Sektionssegmente 3 nach dem Transport zum Montageort dort wieder über das Längsprofil oder das Paar von einzelnen Längsflanschen miteinander verbunden werden können.

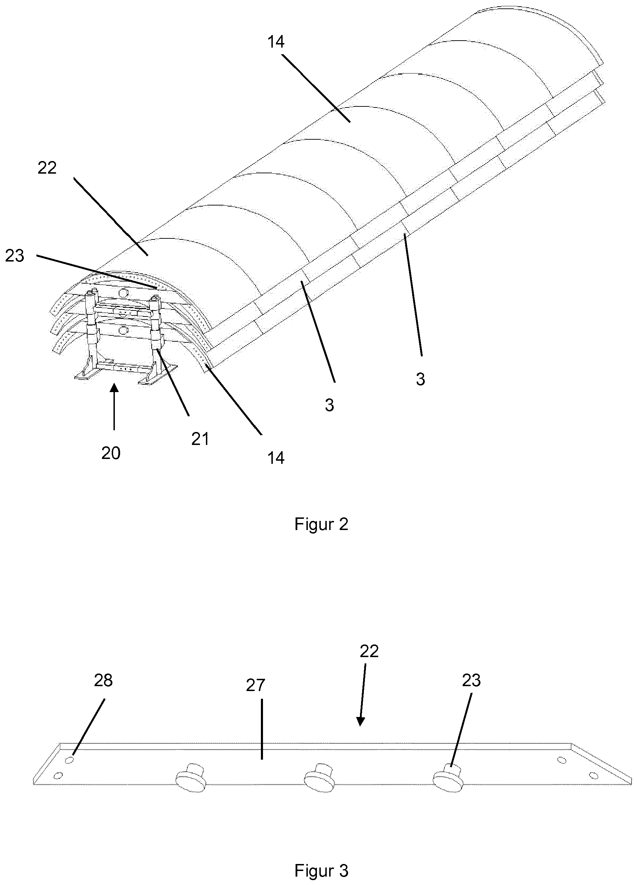

Die Fig. 2 zeigt eine Perspektivansicht eines erfindungsgemäßen Systems mit einem sichtbaren Gestell 20 mit eingehängten Traversen 22 nebst damit verbundener Sektionssegmente 3. Im Ausführungsbeispiel sind drei 120°-Sektionssegmente 3 beabstandet mittels verbundener Traversen 22 an zwei Säulen 21 der Gestelle 20 gelagert, wobei in der Figur ein weiteres erfindungsgemäßes System an den gegenüberliegenden Enden der Sektionssegmente 3 durch die Sektionssegmente 3 verdeckt ist. Diese Anordnung ist hinsichtlich der Logistik besonders vorteilhaft für drei 120°-Segmente einer Turmsektion. Aufgrund der Modularität des Systems kann dieses auch für beispielsweise zwei halbschalenförmige 180°-Segmente oder vier 90°-Segmente konfiguriert werden. Insbesondere für den Transport von Turmsektionssegmenten auf Schiffen können auch mehr als vier Segmente von einem erfindungsgemäßen System aufgenommen werden.

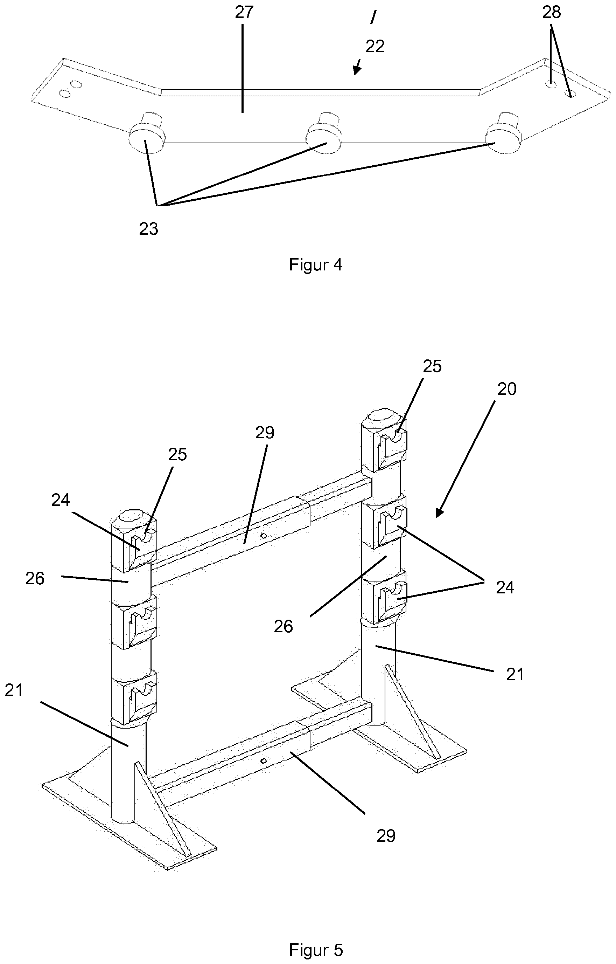

Die Fig. 3 zeigt eine Perspektivansicht einer ersten erfindungsgemäßen Traverse 22. Die Traverse 22 besteht im Ausführungsbeispiel aus einer trapezförmigen Platte 27 und drei pollerförmigen Zapfen 23, wobei die Platte vier Durchgangsbohrungen 28 aufweist. Die Zapfen 23 haben einen ersten zylinderförmigen Abschnitt mit einem ersten Durchmesser, der mit dem Durchmesser der halbkreisförmigen Ausnehmungen 25 in den Aufnahmen 24 an dem Gestell 20 korrespondiert, siehe Fig. 5. Die Zapfen 23 haben einen zweiten zylinderförmigen Abschnitt mit einem größeren zweiten Durchmesser, der die Traverse 22 im eingehängten Zustand gegen ein axiales Verrutschen sichert. Die für eine Verbindung mit einem Ringflanschsegment 14 vorgesehenen Durchgangsbohrungen 28 liegen auf einem Kreisbogen, der mit dem Kreisbogen der Bohrungen des Ringflanschsegments 14 zusammenfällt.

Die Fig. 4 zeigt eine Perspektivansicht einer weiteren erfindungsgemäßen Traverse 22. Wie die Fig. 4 erkennen lässt, besteht die Traverse 22 aus einer Platte 27, welche abgewinkelte Endabschnitte aufweist, in denen jeweils zwei Durchgangsbohrungen 28 zur Verbindung mit einem insbesondere kleineren Ringflanschsegment 14 vorgesehen sind. Die Durchgangsbohrungen 28 liegen auf einem Kreisbogen, der mit dem Kreisbogen der Bohrungen des kleineren Ringflanschsegments 14 zusammenfällt. Die Traverse gemäß Fig. 4 ist bevorzugt für konische Sektionssegmente 3 vorgesehen, bei denen die Turmwand eine im wesentlichen kegelstumpfförmige Form aufweist und die an einem Ende einen Ringflansch 4 mit einem ersten, größeren Radius und an dem anderen Ende einen Ringflansch 4 mit einem zweiten, kleineren Radius besitzen. Die Traverse aus Fig. 4 ist dort für die Seite mit dem Ringflanschsegment 14 mit geringerer Breite bzw. mit geringerem Radius vorgesehen, während an der Seite mit dem Ringflanschsegment 14 mit größerer Breite bzw. größerem Radius bevorzugt die Traverse aus Fig. 3 verwendet wird. Die Zapfen 23 weisen wiederum einen Abschnitt mit einem ersten Durchmesser und einem Abschnitt mit einem größeren zweiten Durchmesser auf, so dass die Traverse 22 im eingehängten Zustand gegen ein axiales Verrutschen gesichert ist. Die Form und der Querschnitt der Zapfen 23 sind nicht auf Form und Querschnitt gemäß dem Ausführungsbeispiel begrenzt, vielmehr können neben der gezeigten kreiszylindrischen Form auch Zapfen 23 mit ovalem, elliptischem oder polygonalem Querschnitte vorgesehen sein.

Die Fig. 5 zeigt eine Perspektivansicht eines erfindungsgemäßen Gestells 20, welches im Ausführungsbeispiel zwei Säulen 21, zwei Querbalken 29, sechs Aufnahmen 24 mit Ausnehmungen 25 und vier Distanzhülsen 26 umfasst. Wie der Fig. 5 beispielsweise zu entnehmen ist, sind die Querbalken 29 teleskopierbar ausgeführt, wodurch sich besonders einfach eine Abstandsänderung der Säulen 21 realisieren lässt. Anstelle der Querbalken 29 können zur Verbindung der Säulen 21 auch Rohre, Diagonalstreben, oder eine Scherengitterkonstruktion vorgesehen sein.

### Bezugszeichen

- 1: Turmsektion
- 2: Sektionsabschnitte
- 3: Sektionssegmente
- 4: Ringflansch

- 9: Trennlinie
- 10: Turmzugangstüröffnung

- 13: erstes Längsprofil
- 14: Ringflanschsegmente

- 20: Gestell
- 21: Säulen
- 22: Traversen
- 23: pollerförmige Zapfen
- 24: Aufnahmen
- 25: halbkreisförmige Ausnehmungen
- 26: Distanzhülsen
- 27: trapezförmige Platte
- 28: Durchgangsbohrungen
- 29: Querbalken

## Patentansprüche

1. System zum Lagern, Transportieren und/oder Handhaben von Sektionssegmenten (3) eines Turms einer Windenergieanlage, umfassend zwei Gestelle (20) und wenigstens zwei Traversen (22), die mit wenigstens einem Sektionssegment (3) verbindbar sind, wobei jede Traverse (22) mindestens zwei Zapfen (23) aufweist, wobei die Zapfen (23) derart ausgebildet sind, dass sie mit Aufnahmen (24) an den Gestellen (20) zusammenpassen, **dadurch gekennzeichnet, dass**
jedes Gestell (20) zwei beabstandete Säulen (21) umfasst, die mittels wenigstens eines Querbalkens (29) und/oder wenigstens einer Strebe lösbar miteinander verbunden sind, derart dass der Abstand der Säulen (21) einstellbar ist und dass wenigstens eine Aufnahme (24) an jeder Säule (21) um eine vertikale Achse schwenkbar gelagert ist.

2. System nach Anspruch 1, **dadurch gekennzeichnet, dass** der wenigstens eine Querbalken (29) teleskopierbar ausgeführt ist.

3. System nach Anspruch 1, **dadurch gekennzeichnet, dass** an jeder Säule (21) wenigstens zwei, vorzugsweise drei Aufnahmen (24) übereinander gelagert sind.

4. System nach Anspruch 3, **dadurch gekennzeichnet, dass** an jeder Säule (21) zwischen zwei Aufnahmen (24) eine auswechselbare Distanzhülse (26) zum Einstellen eines vorbestimmten Abstandes der Aufnahmen (24) angeordnet ist.

5. System nach Anspruch 1, **dadurch gekennzeichnet, dass** die Zapfen (23) gleichmäßig beabstandet auf der Traverse (22) angeordnet sind.

6. System nach Anspruch 1, **dadurch gekennzeichnet, dass** jede Traverse (22) mindestens einen Anschlagpunkt zum Anschlagen der Traverse (22) an ein Anschlagmittel und/oder Tragmittel eines Hebezeugs aufweist.

7. System nach einem der vorhergehenden Ansprüche, **dadurch gekennzeichnet, dass** die oder jede Traverse (22) als Platte (27) ausgebildet ist und wenigstens zwei, vorzugsweise vier Durchgangsbohrungen (28) auf einem gemeinsamen Lochkreis aufweisen.

8. Verfahren zum Lagern, Transportieren und/oder Handhaben von Sektionssegmenten (3) eines Turms einer Windenergieanlage, mittels eines Systems nach einem der Ansprüche 1 bis 7, wobei jedes Gestell (20) zwei beabstandete Säulen (21) und eine Mehrzahl von Aufnahmen (24) umfasst, mit den Schritten zum Errichten der Gestelle (20),
- Aufstellen und Verbinden von zwei Säulen (21) zu einem ersten Paar,
- Aufstellen und Verbinden von zwei Säulen (21) zu einem zweiten Paar,
- paarweises Positionieren der Säulen (21), sodass diese die Eckpfosten eines Rechtecks bilden,
- Positionieren von wenigstens einer Aufnahme (24) in einer vorstimmten Höhe an jeder Säule (21) und
- paarweises Ausrichten der Aufnahmen (24) mit ihren Ausnehmungen (25) derart, dass die Ausnehmungen (25) des ersten Paares und die Ausnehmungen (25) des zweiten Paares parallel ausgerichtet und einander zugewandt sind.

9. Verfahren nach Anspruch 8 mit den zusätzlichen Schritten zum Handhaben eines ersten Sektionssegments (3),
- Anschlagen eines ersten Lastaufnahmemittels an einer ersten Traverse (22),
- Verbinden der ersten Traverse (22) mit einem ersten Ringflanschsegment (14) des ersten Sektionssegments (3),
- Anschlagen eines zweiten Lastaufnahmemittels an einer zweiten Traverse (22),
- Verbinden der zweiten Traverse (22) mit dem zweiten Ringflanschsegment (14) des ersten Sektionssegments (3),
- gleichzeitiges Anheben beider mit dem Sektionssegment (3) verbundenen Traversen (22) mittels wenigstens eines Kranes oder Schwerlaststaplers,
- Verbringen des ersten Sektionssegments (3) oberhalb der Gestelle (20) und Absenken und Absetzen des Sektionssegments (3) mittels der verbundenen Traversen (22) derart, dass die Zapfen (23) der Traversen (22) in Aufnahmen (24) der untersten Ebene der Gestelle (20) eingeführt werden oder sind und
- Lösen des ersten und zweiten Lastaufnahmemittels von der ersten und zweiten Traverse (22).

10. Verfahren nach Anspruch 9 mit den Schritten zum Handhaben eines zweiten oder weiteren Sektionssegments (3),
- Anschlagen des ersten und zweiten Lastaufnahmemittels an jeweils einer weiteren Traverse (22),
- Verbinden der weiteren Traversen (22) mit den Ringflanschsegmenten (14) eines zweiten oder weiteren Sektionssegments (3),
- gleichzeitiges Anheben beider mit dem Sektionssegment (3) verbundenen Traversen (22) mittels des wenigstens einen Kranes oder Schwerlaststaplers,
- Schwenken der Aufnahmen (24) der zweiten oder weiteren Ebene der Gestelle (20) um eine vertikale Achse derart, dass diese den aufzunehmenden Zapfen (23) zugewandt sind,
- Verbringen des zweiten oder weiteren Sektionssegments (3) oberhalb der Gestelle (20),
- Absenken und Absetzen des Sektionssegments (3) mittels der verbundenen Traversen (22) derart, dass die Zapfen (23) der Traversen in die Aufnahmen der zweiten oder weiteren Ebene der Gestelle (20) eingeführt werden oder sind und
- Lösen des ersten und des zweiten Lastaufnahmemittels von den Traversen (22).

## Claims

1. System for storing, transporting and/or handling section segments (3) of a tower of a wind turbine, comprising two frames (20) and at least two cross-members (22), which can be connected to at least one section segment (3), wherein each cross-member (22) has at least two pegs (23), wherein the pegs (23) are formed in such a way that they fit in receptacles (24) on the frames (20),
**characterized in that** each frame (20) comprises two spaced columns (21), which are detachably connected to each other by means of at least one transverse beam (29) and/or at least one strut, in such a way that the spacing of the columns (21) is adjustable, and that at least one receptacle (24) on each column (21) is mounted such that it can be pivoted about a vertical axis.

2. System according to Claim 1, **characterized in that** the at least one transverse beam (29) is designed to be telescopic.

3. System according to Claim 1, **characterized in that** at least two, preferably three, receptacles (24) are mounted above one another on each column (21).

4. System according to Claim 3, **characterized in that** a replaceable spacer sleeve (26) for adjusting a predetermined spacing of the receptacles (24) is arranged on each column (21), between two receptacles (24).

5. System according to Claim 1, **characterized in that** the pegs (23) are spaced uniformly on the cross-member (22).

6. System according to Claim 1, **characterized in that** each cross-member (22) has at least one attachment point for the attachment of the cross-member (22) to an attachment means and/or supporting means of a hoist.

7. System according to one of the preceding claims, **characterized in that** the or each cross-member (22) is formed as a plate (27) and has at least two, preferably four, passage holes (28) on a common pitch circle.

8. Method for storing, transporting and/or handling section segments (3) of a tower of a wind turbine by means of a system according to one of Claims 1 to 7, wherein each frame (20) comprises two spaced columns (21) and a plurality of receptacles (24), comprising the steps for erecting the frames (20),
- setting up and connecting two columns (21) to form a first pair,
- setting up and connecting two columns (21) to form a second pair,
- positioning the columns (21) in pairs, so that the corner posts form a rectangle,
- positioning at least one receptacle (24) at a predetermined height on each column (21) and
- aligning the receptacles (24) with their recesses (25) in pairs in such a way that the recesses (25) of the first pair and the recesses (25) of the second pair are aligned in parallel and face one another.

9. Method according to Claim 8, comprising the additional steps for handling a first section segment (3),
- attaching a first load-bearing means to a first cross-member (22),
- connecting the first cross-member (22) to a first annular flange segment (14) of the first section segment (3),
- attaching a second load-bearing means to a second cross-member (22),
- connecting the second cross-member (22) to the second annular flange segment (14) of the first section segment (3),
- simultaneously lifting both cross-members (22) connected to the section segment (3) by means of at least one crane or heavy duty fork lift,
- moving the first section segment (3) above the frames (20) and lowering and setting down the section segment (3) by means of the connected cross-members (22) in such a way that the pegs (23) of the cross-members (22) are or have been inserted in receptacles (24) of the lowest level of the frames (20),
- detaching the first and second load-bearing means from the first and second cross-member (22).

10. Method according to Claim 9, comprising the steps for handling a second or further section segment (3),
- attaching the first and second load-bearing means to a respective further cross-member (22),
- connecting the further cross-member (22) to the annular flange segments (14) of a second or further section segment (3),
- simultaneously lifting both cross-members (22) connected to the section segment (3) by means of the at least one crane or heavy duty fork lift,
- pivoting the receptacles (24) of the second or further level of the frames (20) about a vertical axis in such a way that these face the pegs (23) to be accommodated,
- moving the second or further section segment (3) above the frames (20),
- lowering and setting down the section segment (3) by means of the connected cross-members (22) in such a way that the pegs (23) of the cross-members are or have been inserted into the receptacles of the second or further level of the frames (20), and
- detaching the first and the second load-bearing means from the cross-members (22).

## Revendications

1. Système de stockage, de transport et/ou de manutention de segments de section (3) d'une tour d'une éolienne, le système comprenant deux châssis (20) et au moins deux traverses (22) qui peuvent être connectés à au moins un segment de section (3), chaque traverse (22) comportant au moins deux broches (23), les broches (23) étant conçues de manière à correspondre aux logements (24) sur les châssis (20), **caractérisé en ce que**
chaque châssis (20) comprend deux colonnes espacées (21) qui sont reliées entre elles de manière amovible au moyen d'au moins une poutre transversale (29) et/ou d'au moins une entretoise de manière à pouvoir régler la distance entre les colonnes (21) et **en ce qu'**au moins un logement (24) est monté sur chaque colonne (21) de manière pivotante sur un axe vertical.

2. Système selon la revendication 1, **caractérisé en ce que**
l'au moins une poutre transversale (29) est conçue pour être télescopique.

3. Système selon la revendication 1, **caractérisé en ce que**
au niveau de chaque colonne (21) au moins deux, de préférence trois, logements (24) sont superposés.

4. Système selon la revendication 3, **caractérisé en ce que**
un manchon d'espacement interchangeable (26) est disposé entre deux logements (24) au niveau de chaque colonne (21) pour régler une distance prédéterminée entre les logements (24).

5. Système selon la revendication 1, **caractérisé en ce que**
les broches (23) sont disposées régulièrement à distance sur la traverse (22).

6. Système selon la revendication 1, **caractérisé en ce que**
chaque traverse (22) possède au moins un point de butée permettant à la traverse (22) de venir en butée sur un moyen de butée et/ou un moyen de support d'un treuil.

7. Système selon l'une des revendications précédentes, **caractérisé en ce que** la traverse ou chaque traverse (22) est réalisée sous la forme d'une plaque (27) et comporte au moins deux, de préférence quatre, perçages traversants (28) sur un cercle de trous commun.

8. Procédé de stockage, de transport et/ou de manutention de segments de section (3) d'une tour d'une éolienne, au moyen d'un système (20) selon l'une des revendications 1 à 7, chaque châssis (20) comprenant deux colonnes espacées (21) et une pluralité de logements (24), le procédé comprenant les étapes suivantes de montage des châssis (20),
- installer et relier deux colonnes (21) pour former une première paire,
- installer et relier deux colonnes (21) pour former une deuxième paire,
- positionner les colonnes (21) par paires de manière à former les poteaux d'angle d'un rectangle,
- positionner au moins un logement (24) à une hauteur prédéterminée sur chaque colonne (21) et
- orienter par paire les logements (24) avec leurs évidements (25) de telle sorte que les évidements (25) de la première paire et les évidements (25) de la deuxième paire soient orientés en parallèle et face à face.

9. Procédé selon la revendication 8 comprenant les étapes supplémentaires suivantes de manipulation d'un premier segment de section (3),
- amener un premier moyen de réception de charge en butée contre une première traverse (22),
- relier la première traverse (22) à un premier segment de bride annulaire (14) du premier segment de section (3),
- amener un deuxième moyen de réception de charge en butée contre une deuxième traverse (22),
- relier la deuxième traverse (22) au deuxième segment de bride annulaire (14) du premier segment de section (3),
- soulever simultanément les deux traverses (22) reliées au segment de section (3) au moyen d'au moins une grue ou d'un chariot élévateur de charges lourdes,
- déplacer le premier segment de section (3) au-dessus des châssis (20) et abaisser et déposer le segment de section (3) au moyen des traverses reliées (22) de manière à introduire les broches (23) des traverses (22), ou à ce que lesdites broches soient introduites, dans des logements (24) du niveau le plus inférieur des châssis (20) et
- détacher les premier et deuxième moyens de réception de charge des première et deuxième traverses (22) .

10. Procédé selon la revendication 9, comprenant les étapes suivantes de manipulation d'un deuxième, ou d'un autre, segment de section (3),
- amener les premier et deuxième moyens de réception de charge en butée contre une autre traverse (22),
- relier les autres traverses (22) aux segments de bride annulaire (14) d'un deuxième, ou d'un autre, segment de section (3),
- soulever simultanément les deux traverses (22) reliées au segment de section (3) au moyen de l'au moins une grue ou un chariot élévateur de charges lourdes,
- faire pivoter les logements (24) du deuxième, ou de l'autre, niveau des châssis (20) sur un axe vertical de manière à les diriger vers les broches (23) à recevoir,
- déplacer le deuxième, ou l'autre, segment de section (3) au-dessus des châssis (20),
- abaissement et déposer le segment de section (3) au moyen des traverses reliées (22) de manière à introduire les broches (23) des traverses, ou à ce que lesdites broches soient introduites, dans les logements du deuxième, ou de l'autre, niveau des châssis (20) et
- détacher le premier et le deuxième moyen de réception de charge des traverses (22).
